# EUROPEAN PATENT SPECIFICATION

(11) **EP 2 007 207 B1**
(45) Date of publication and mention of the grant of the patent: **22.07.2015**
(21) Application number: 07715914.3
(22) Date of filing: 09.03.2007
(51) Int. Cl.: A21D 13/00, A23L 1/01

(54) **METHOD FOR FINISH-FRYING DOUGHNUTS**
VERFAHREN ZUM FERTIGFRITTIEREN VON DOUGHNUTS
PROCEDE DE FRITURE DE BEIGNETS

(30) Priority: 10.03.2006 WO PCT/NL2006/000127
(43) Date of publication of application: 31.12.2008
(73) Proprietor: Nederlandse Organisatie voor toegepast- natuurwetenschappelijk onderzoek TNO, 2595 DA 's-Gravenhage (NL)
(72) Inventor: MEIJER, Henk-Jan, NL-7329 AZ Apeldoorn (NL); HEIJMANS, Rudy, Mathias, Henricus, NL-6932 MN Westervoort (NL)
(74) Representative: Hatzmann, Martin
(86) International application number: PCT/NL2007/050096
(87) International publication number: WO 2007/105947

(56) References cited:
- WO-A1-98/11783
- GB-A- 2 347 338
- GB-A- 2 359 975
- US-A- 5 171 600
- US-A- 5 846 589

## Description

The present invention relates to a method for finish-frying doughnuts in superheated steam.

Food products that need to be finished fried are products, optionally pre-fried by the food product manufacturer, that need to be finished before consumption by the consumer. Object of the present invention is to provide a method of finish-frying doughnuts which method provides very attractive products for consumers in terms of a texture, colour, and taste, whereas at the same time the fried doughnuts obtained have a lower fat content than conventionally finish-fried doughnuts, and the fat present in the finish-fried doughnuts is from health perspective of a better quality when compared with doughnuts that have been finish-fried in oil or fat.GB-A 2 395 975 relates to a process wherein it is proposed to replace the frying of doughnuts by a method wherein a proven dough mixture is sprayed with cooking fat and then baked. The use of a (hot air) oven is mentioned. Optionally the baking step may include injection of steam. It is stated that doughnuts can be made having a fat content of about 8 to 10 g.

Surprisingly, it has been found that this can be achieved when use is made of a finish-frying method wherein doughnuts that have usually been chilled or frozen and stored are contacted with superheated steam.

Accordingly, the present invention relates to a method for finish-frying doughnuts in superheated steam having a flow rate in the range of from 1 to 20 m/s, at a temperature in the range of from 150-250°C and for a period of time in the range of from 10 seconds to 20 minutes, wherein more than 75% of the surface of the doughnuts is contacted with the superheated steam and wherein the doughnuts are not pre-fried.

The doughnuts obtained with the method according to the present invention display excellent properties in terms of texture, colour, and taste. Another advantage of the present method is its positive effect on the environment since odour nuisance related to finish frying with oils will be considerably reduced, and waste oils will no longer be generated. Yet another advantage of the present invention is that the doughnuts obtained with the present method have a low fat content which has a positive influence on the health of consumers, resulting in, for instance, less obesity and cardiovascular related diseases. Further, it also avoids the use of deteriorated oils, which has an impact on the quality of the food product to be consumed. In addition, it is from a safety point of view noted that the spattering of oils can advantageously be eliminated. Thus, the development of slippery floors can be avoided.

It is noted that the use of superheated steam as part of the production of different kinds of foods (batter coated foods, snacks) is known *per se,* from GB 2 347 338, US 5 171 600 or US 5 846 589. The purpose of superheated steam in these prior art is to remove excess fat from products that have been conventionally fried using an oil.

WO 98/11783 describes a 96% fat-free donut composition and baking pan for preparing said donut by baking in an oven.

Preferably, the method according to the present invention is carried out in such a way that more than 90% of the surface of the doughnuts is contacted with the superheated steam. More preferably, more than 95% of the surface of the doughnuts is contacted with the superheated steam, and most preferably the complete or essentially complete surface of the doughnuts is contacted with the superheated steam.

The contact between the surface of the doughnuts and the superheated steam can be established in different ways. This can, for example, be established by way of fluidisation.

In other attractive embodiments of the present invention this can be established by carrying out the present method in a rotary drum or carrying it out on a sieve belt or vibrating screen. In fact, any embodiment that can bring about the desired steam flow and contact between steam and the doughnuts can suitably be used in the method according to the present invention.

Preferably, the method according to the present invention is carried out in a gas comprising at least 50 volume % of superheated steam, based on total gas. More preferably, the gas comprises more than 90 volume % of superheated steam, based on total gas.

Preferably, the doughnuts to be finish-fried in accordance with the present invention have a moisture content of less than 80 %, more preferably of less than 75%.

According to a particularly preferred embodiment, the doughnuts subjected to finish-frying in superheated steam in accordance with the present invention are not pre-fried. Doughnuts with a low fat content can suitably be prepared by means of a subsequent parfry treatment in oil or by applying a spray of oil onto them before they are finish fried in superheated steam.

The flow rate of the superheated steam is within a broad range. Preferably, however, the flow rate of the superheated steam is in the range of from 1 to 20 m/s, more preferably in the range of from 5 to 15 m/s and most preferably in the range from 10 to 15 m/s.

The method of the present invention is preferably carried out at a temperature in the range of from 150 to 250 °C, and more preferably in the range of from 175 to 220 °C.

The method according to the present invention is carried for a period of time in the range of from 10 seconds to 20 minutes. Preferably, the present method is carried out for a period of time in the range of from 3 to 6 minutes, more preferably for a period of time in the range of from 4 to 5 minutes.

Suitably, in accordance with the present invention the part of the surface of the doughnuts that is contacted with the superheated steam is contacted with the steam for more than 75% of the period of time, preferably more than 90% of the period of time, more preferably more than 95% of the period of time, and most preferably for the complete or essentially complete period of time.

Suitably, the method in accordance with the present invention is carried out at a pressure in the range of from 0.1 to 10 bara, preferably at a pressure in the range of from 0.9 to 1.1 bara.

The doughnuts to be finish-fried with the present method suitably have a fat content in the range of from 0 % to 15%, preferably in the range of from 2% to 8%.

The doughnuts obtainable with the method according to the present invention also display unique properties in terms of taste, crispiness, mouth feel and low fat content.

### Examples

### Example 1

Ring doughnuts (41 grams) were prepared using the following recipe:

| | Wt.% |
|---|---|
| Flour | 54.2 |
| Water | 31.2 |
| Doughnut concentrate | 8.3 |
| Fat | 3.7 |
| Yeast | 2.6 |

In order to allow them to be shipped to another location for finish-frying, the raw doughnuts so prepared were frozen and stored at -20 °C. After 3 weeks, the frozen doughnuts were taken from the freezer and allowed to thaw at 25 °C for 30 minutes. Subsequently, the doughnuts were proofed by placing them in a proofing cabinet for 60 minutes (30 °C, 80% relative humidity).

The proofed doughnuts so obtained were divided into 4 groups: A, B, C, D and a reference group. Doughnuts belonging to groups B, C and D were sprayed on both sides with in total 2%, 6% and 9% of palm oil, respectively. The doughnuts belonging to the reference group were deep fried.

Immediately after proofing and fat coating, the doughnuts were placed on trays of a fine wire mesh (porosity > 80%). The trays were placed into a steam channel in which superheated steam (180 °C) was blown (7.2 m/s) upward through the wire mesh. After 90 seconds, the trays were removed, the doughnuts were turned and the tray was reinserted into the steam channel. After another 90 seconds, the trays were removed from the steam channel and allowed to cool down.

The doughnuts so obtained were analysed, yielding the following data:

| | A | B | C | D |
|---|---|---|---|---|
| Fat content (wt.%) | 6.1 | 6.3 | 7.8 | 7.8 |
| Moisture | 33.5 | 33.3 | 31.8 | 31.7 |
| Specific volume | 2.5 | 2.6 | 2.6 | 2.6 |

The fat content of the doughnuts so obtained was considerably lower than that of the doughnuts belonging to the reference group. The latter doughnuts had a fat content of about 18 wt.%.

The finish fried products obtained after the treatment with superheated steam were also evaluated by an expert panel. The products that had been coated with palm oil prior to the finish frying treatment (products B, C and D) were found to be superior to the doughnuts that had not been pre-coated (product A). In particular, it was observed that the doughnuts that had not been pretreated had a slightly 'leathery' crust.

### Example 2

Example 1 was repeated except that this time sunflower oil was used instead of palm oil. Comparable results were obtained.

### Example 3

Example 1 was repeated except that this time rapeseed oil was used instead of sunflower oil. Comparable results were obtained.

### Example 4

Example 1 was repeated except that the superheated steam had a temperature of 220 °C and in that the doughnuts were finish fried by introducing them into the steam channel for twice 50 seconds. Again, comparable results were obtained.

### Example 5

Example 1 was repeated except that the superheated steam had a temperature of 160 °C and in that the doughnuts were finish fried by introducing them into the steam channel for twice 110 seconds. Once again, comparable results were obtained.

### Example 6

Ring doughnuts ready for finish frying were prepared as in Example 1. After proofing, the doughnuts were parfried by dipping them for 10 seconds in hot oil having a temperature of 180 °C. Subsequently, the doughnuts were finish fried in the same way as described in Example 1, except that this time the residence time in the steam channel was two times 40 seconds. The fat content of the doughnuts so obtained was about 11.5 wt.%. In terms of quality these doughnuts were found to be comparable to the doughnuts belonging to groups C and D of Example 1.

## Claims

1. Method for finish-frying doughnuts in superheated steam having a flow rate in the range of from 1 to 20 m/s, at a temperature in the range of from 150-250°C and for a period of time in the range of from 10 seconds to 20 minutes, wherein more than 75% of the surface of the doughnuts is contacted with the superheated steam and wherein the doughnuts are not pre-fried.

2. Method according to claim 1, wherein oil is applied onto the doughnuts before they are finish-fried.

3. Method according to claim 2, wherein a spray of oil is applied onto the doughnuts before they are finish-fried.

4. Method according to claim 1, wherein more than 90% of the surface of the doughnuts is contacted with the superheated steam.

5. Method according to claim 4, wherein more than 95% of the surface of the doughnuts is contacted with the superheated steam.

6. Method according to claim 5, wherein the complete or essentially complete surface of the doughnuts is contacted with the superheated steam.

7. Method according to any one of claims 1-6, wherein the part of the surface of the doughnuts that is contacted with the superheated steam is contacted with the steam for more than 75% of the period of time.

8. Method according to claim 7, wherein the part of the surface of the doughnuts that is contacted with the superheated steam is contacted with the steam for more than 90% of the period of time.

9. Method according to claim 8, wherein the part of the surface of the doughnuts that is contacted with the superheated steam is contacted with the steam for the complete or essentially complete period of time.

10. Method according to any one of claims 1-9, which is carried out on a sieve belt.

11. Method according to any one of claims 1-10, wherein the doughnuts have a moisture content of less than 80%.

12. Method according to any one of claims 1-11, wherein the flow rate of the superheated steam is in the range of from 5 to 15 m/s.

13. Method according to any one of claims 1-12, wherein the temperature is in the range of from 175 to 220°C.

14. Method according to any one of claims 1-13, wherein the period of time is in the range of from 3 to 6 minutes.

15. Method according to any one of claims 1-14, which is carried out at a pressure in the range of from 0.1 to 10 bara.

16. Method according to any one of claims 1-15, which is carried out in a gas comprising at least 50 volume % of superheated steam, based on total gas.

17. Method according to any one of claims 1-16, wherein the doughnuts have a fat content in the range of from 0 to 15%.

## Patentansprüche

1. Verfahren zum Fertigfrittieren von Donuts in Heißdampf mit einer Flussrate im Bereich von 1 bis 20 m/s bei einer Temperatur im Bereich von 150-250 °C und während einer Zeitdauer im Bereich von 10 Sekunden bis 20 Minuten, wobei mehr als 75 % der Oberfläche der Donuts mit Heißdampf kontaktiert wird, und wobei die Donuts nicht vorfrittiert werden.

2. Verfahren nach Anspruch 1, wobei Öl auf die Donuts aufgebracht wird, bevor sie fertigfrittiert werden.

3. Verfahren nach Anspruch 2, wobei ein Ölnebel auf die Donuts aufgebracht wird, bevor sie fertigfrittiert werden.

4. Verfahren nach Anspruch 1, wobei mehr als 90 % der Oberfläche der Donuts mit dem Heißdampf kontaktiert wird.

5. Verfahren nach Anspruch 4, wobei mehr als 95 % der Oberfläche der Donuts mit dem Heißdampf kontaktiert wird.

6. Verfahren nach Anspruch 5, wobei die vollständige oder im Wesentlichen die vollständige Oberfläche der Donuts mit dem Heißdampf kontaktiert wird.

7. Verfahren nach einem der Ansprüche 1-6, wobei der Teil der Oberfläche der Donuts, der mit dem Heißdampf kontaktiert wird, mit dem Heißdampf während mehr als 75 % der Zeitdauer kontaktiert wird.

8. Verfahren nach Anspruch 7, wobei der Teil der Oberfläche der Donuts, der mit dem Heißdampf kontaktiert wird, mit dem Heißdampf während mehr als 90 % der Zeitdauer kontaktiert wird.

9. Verfahren nach Anspruch 8, wobei der Teil der Oberfläche der Donuts, der mit dem Heißdampf kontaktiert wird, mit dem Dampf während der vollständigen oder im Wesentlichen vollständigen Zeitdauer kontaktiert wird.

10. Verfahren nach einem der Ansprüche 1-9, das auf einem Siebtransportband ausgeführt wird.

11. Verfahren nach einem der Ansprüche 1-10, wobei die Donuts einen Feuchtigkeitsgehalt von weniger als 80 % haben.

12. Verfahren nach einem der Ansprüche 1-11, wobei die Flussrate des Heißdampfes im Bereich von 5 bis 15 m/s ist.

13. Verfahren nach einem der Ansprüche 1-12, wobei die Temperatur im Bereich von 175 bis 220 °C ist.

14. Verfahren nach einem der Ansprüche 1-13, wobei die Zeitdauer im Bereich von 3 bis 6 Minuten ist.

15. Verfahren nach einem der Ansprüche 1-14, das bei einem Druck im Bereich von 0,1 bis 10 bar absolut ausgeführt wird.

16. Verfahren nach einem der Ansprüche 1-15, das in einem Gas ausgeführt wird, das, basierend auf dem Gesamtgas, mindestens 50 Volumen-% an Heißdampf umfasst.

17. Verfahren nach einem der Ansprüche 1-16, wobei die Donuts einen Fettgehalt im Bereich von 0 bis 15 % haben.

## Revendications

1. Procédé de friture finale de beignets dans de la vapeur surchauffée ayant un débit situé dans la plage allant de 1 à 20 m/s, à une température dans la plage allant de 150 à 250°C et pendant une période de temps dans la plage allant de 10 secondes à 20 minutes, dans lequel plus de 75 % de la surface des beignets est mise en contact avec la vapeur surchauffée et dans lequel les beignets ne sont pas pré-frits.

2. Procédé selon la revendication 1, dans lequel de l'huile est appliquée sur les beignets avant la friture finale.

3. Procédé selon la revendication 2, dans lequel une pulvérisation d'huile est appliquée sur les beignets avant la friture finale.

4. Procédé selon la revendication 1, dans lequel plus de 90 % de la surface des beignets est en contact avec la vapeur surchauffée.

5. Procédé selon la revendication 4, dans lequel plus de 95 % de la surface des beignets est en contact avec la vapeur surchauffée.

6. Procédé selon la revendication 5, dans lequel la surface totale ou pratiquement totale des beignets est en contact avec la vapeur surchauffée.

7. Procédé selon l'une quelconque des revendications 1 à 6, dans lequel la partie de la surface des beignets qui est en contact avec la vapeur surchauffée est en contact avec la vapeur pendant plus de 75 % de la période de temps.

8. Procédé selon la revendication 7, dans lequel la partie de la surface des beignets qui est en contact avec la vapeur surchauffée est en contact avec la vapeur pendant plus de 90 % de la période de temps.

9. Procédé selon la revendication 8, dans lequel la partie de la surface des beignets qui est en contact avec la vapeur surchauffée est en contact avec la vapeur pendant la totalité ou pratiquement la totalité de la période de temps.

10. Procédé selon l'une quelconque des revendications 1 à 9, qui est effectué sur une courroie de tamisage.

11. Procédé selon l'une quelconque des revendications 1 à 10, dans lequel les beignets ont une teneur en humidité inférieure à 80 %.

12. Procédé selon l'une quelconque des revendications 1 à 11, dans lequel le débit de la vapeur surchauffée est dans la plage allant de 5 à 15 m/s.

13. Procédé selon l'une quelconque des revendications 1 à 12, dans lequel la température est dans la plage allant de 175 à 220°C.

14. Procédé selon l'une quelconque des revendications 1 à 13, dans lequel la période de temps est dans la plage de 3 à 6 minutes.

15. Procédé selon l'une quelconque des revendications 1 à 14, qui est effectué à une pression dans la plage allant de 0,1 à 10 bars.

16. Procédé selon l'une quelconque des revendications 1 à 15, qui est effectué dans un gaz comprenant au moins 50 % en volume de vapeur surchauffée, sur la base du gaz total.

17. Procédé selon l'une quelconque des revendications 1 à 16, dans lequel les beignets ont une teneur en matières grasses dans la plage allant de 0 à 15 %.
